# EUROPÄISCHE PATENTSCHRIFT

(11) **EP 1 225 092 B1**
(45) Veröffentlichungstag und Bekanntmachung des Hinweises auf die Patenterteilung: **14.04.2004**
(21) Anmeldenummer: 02090013.0
(22) Anmeldetag: 15.01.2002
(51) Int. Cl.: B60R 1/062, B60R 1/066, B60R 1/072

(54) **Kraftfahrzeugspiegel**
Motor car mirror
Miroir d'automobile

(30) Priorität: 15.01.2001 DE 10102451
(43) Veröffentlichungstag der Anmeldung: 24.07.2002
(73) Patentinhaber: Magna Reflex Holding GmbH, 97959 Assamstadt (DE)
(72) Erfinder: Juraschek, Peter, 74385 Pleidelsheim (DE)
(74) Vertreter: Pfenning, Meinig & Partner GbR

(56) Entgegenhaltungen:
- EP-A- 0 276 677
- DE-A- 3 144 547
- DE-U- 29 618 497
- US-A- 5 313 336

## Beschreibung

Die Erfindung betrifft einen Kraftfahrzeugspiegel mit einer in einem Gehäuse aufgenommenen Spiegelglasbaugruppe, die an einer Verstellvorrichtung zum Einstellen der Position der Spiegelglasbaugruppe über formschlüssige Verbindungen befestigt ist.

Für Kraftfahrzeugaußenspiegel ist allgemein bekannt, die mindestens einen Träger und ein daran befestigtes Spiegelglas aufweisende Spiegelglasbaugruppe mit einem Verstellmechanismus zu verbinden, der manuell oder elektrisch ausgebildet sein kann. Mittels des Verstellmechanismus wird die Position der Spiegelglasbaugruppe in Bezug auf den Fahrer des Kraftfahrzeuges eingestellt. Für die Verbindung der Spiegelglasbaugruppe mit dem Verstellmechanismus sind unterschiedlichste Verbindungsarten bekannt, beispielsweise sind an dem Spiegelglasträger und dem Verstellmechanismus Klips- oder Rastelemente angeformt, die miteinander eine formschlüssige Verbindung bilden (DE 31 44 547 Al). Beim Lösen dieser Klips- oder Rastverbindungen brechen teilweise die Klips- oder Rastelemente ab oder, wenn sie für ein besseres Lösen weicher gemacht werden, verschlechtert sich die Haltfähigkeit.

Weiterhin ist bekannt, einen Federdraht vorzusehen, der mit einem Ende an dem Träger festgelegt ist und der beim Montieren den Rand oder einen Randansatz des Verstellmechanismus übergreift und unter Spannung mit dem anderen Ende an einer Schulter oder einem hakenförmigen Ansatz am Spiegelträger festgelegt wird. Eine solche formschlüssige Verbindung hat den Nachteil, dass der Spiegelglasträger schwierig am Verstellmechanismus zu befestigen und dass auch ein Lösen der Spiegelglasbaugruppe vom Verstellmechanismus umständlich ist.

Der Erfindung liegt daher die Aufgabe zugrunde, einen Kraftfahrzeugspiegel mit einer an einer Verstellvorrichtung über eine formschlüssige Verbindung befestigte Spiegelglasbaugruppe dahingehend zu verbessern, dass die Spiegelglasbaugruppe in einfacher Weise an dem Verstellmechanismus zu montieren ist und auch von außen hier von der Verstellvorrichtung leicht und ohne Schaden zu verursachen, zu demontieren ist.

Diese Aufgabe wird erfindungsgemäß durch die kennzeichnenden Merkmale des Hauptanspruchs in Verbindung mit den Merkmalen des Oberbegriffs gelöst.

Erfindungsgemäß ist die formschlüssige Verbindung als lösbare Rastfederverbindung ausgebildet, bei der eine Rastfeder einer Schulter an der Verstellvorrichtung hintergreift und die Rastfeder besteht aus einem gebogenen Federband, das zu einem Haken gebogen ist, wobei in Einführrichtung vor dem Haken eine Einlaufschräge vorgesehen ist und wobei die Endbereiche an dem Spiegelträger festgelegt sind bzw. sich abstützen. In einfacher Weise kann damit die Spiegelglasbaugruppe an der Verstellvorrichtung montiert werden, indem die Schulter an der Einlaufschräge unter federnder Verbiegung des Federbandes entlang gleitet bis der Haken die Schulter hintergreift. Durch die erfindungsgemäße Anordnung wird eine leichte Montage gewährleistet und darüber hinaus ist die Rastfeder einfach und kostengünstig herstellbar.

Besonders vorteilhaft ist, daß der sich an einem Vorsprung am Spiegelträger abstützende Endbereich in einfacher Weise von außen mittels eines Werkzeuges zu lösen ist, wobei der Vorsprung so ausgebildet ist, daß das Ende des Federbandes für das Werkzeug zugänglich ist. Auf diese Weise kann durch Abheben des Endes von dem Vorsprung am Spiegelglasträger die Rastverbindung in einfacher Weise gelöst werden und die Spiegelglasbaugruppe durch Abziehen vom Verstellmechanismus leicht demontiert werden.

Durch die in den Unteransprüchen angegebenen Maßnahmen sind vorteilhafte Weiterbildungen und Verbesserungen möglich.

Ausführungsbeispiele der Erfindung sind in der Zeichnung dargestellt und werden in der nachfolgenden Beschreibung näher erläutert. Es zeigen:
- Fig. 1 a), b): eine Schnittansicht und eine Aufsicht auf den erfindungsgemäßen Kraftfahrzeugspiegel nach einem ersten Ausführungsbeispiel,
- Fig. 2 a), b): eine Seitenansicht und eine Aufsicht auf einen Kraftfahrzeugspiegel nach einem zweiten Ausführungsbeispiel,
- Fig. 3 a), b): eine Seitenansicht des erfindungsgemäßen Kraftfahrzeugspiegels beim Lösen der Spiegelglasbaugruppe, und
- Fig. 4: eine Seitenansicht auf die in den Fign. 1 bis 3 verwendete Rastfeder.

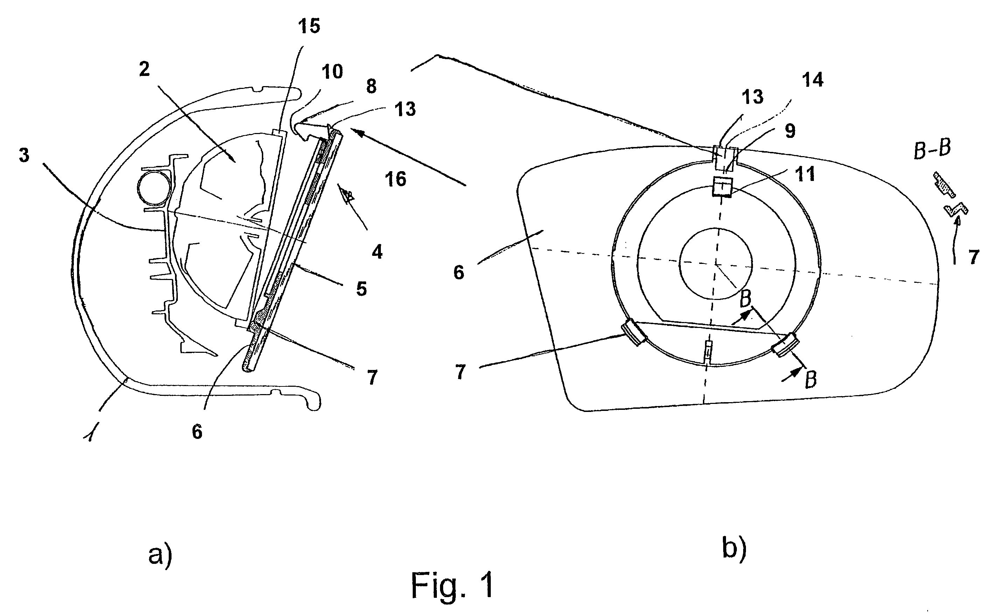

Der in Fig. 1 dargestellte Außenspiegel weist ein Gehäuse 1 auf, in dem ein Verstellantrieb 2, im vorliegenden Ausführungsbeispiel elektrischer Art, aufgenommen ist. In der Zeichnung ist die Verstellbarkeit des Antriebes 2 durch unterschiedliche Stellungen angedeutet. Üblicherweise weist der Verstellantrieb 2 ein feststehendes und ein bewegliches Teil auf, wobei der feststehende Teil mit einer Befestigungsplatte 3 verbunden ist, was in der Figur der Übersichtlichkeit halber nicht näher gezeigt ist. Weiterhin ist eine Spiegelglasbaugruppe 4 in dem Spiegelgehäuse 1 aufgenommen, die aus einem Spiegelglas 5 und einem Spiegelglasträger 6 besteht, wobei der Spiegelglasträger 6 im montierten Zustand mit dem Verstellantrieb 2 verbunden ist.

Fig. 1b) zeigt den Spiegelglasträger 6 von hinten, d.h. von der dem Verstellantrieb 2 zugewandten und vom Spiegelglas 5 abgewandten Seite. Dieser Spiegelglasträger weist zwei angeformte Haken 7 auf, deren Ausbildung näher im Schnitt B-B gezeigt sind und die mit einem entsprechenden Ansatz auf dem Umfang des Verstellmechanismus 2 in Eingriff treten können. Weiterhin ist an dem Spiegelglasträger 6 im Randbereich desselben eine Rastfeder 8 vorgesehen, deren Querschnitt in Fig. 4 dargestellt ist. Diese Rastfeder 8 besteht aus einem Federband, vorzugsweise aus federndem Metall, das entsprechend Fig. 4 gebogen ist, derart, daß das Federband einen Hakenbereich 9 mit einer Einlaufschräge 10 aufweist. Der eine Endbereich 11 ist entsprechend Fig. 1b) durch eine Ausnehmung im Spiegelglasträger 6 "gefädelt" und durch nicht dargestellte Anschläge positioniert. Das andere freie Ende 12 der Rastfeder 8 stützt sich an einem Vorsprung 13 oder Nase oder dergleichen am Rand des Spiegelglasträgers 6 ab, wie aus Fig. 1a) und 1b) zu erkennen ist. Der Vorsprung 13 weist eine Lücke 14 auf, die für den Eingriff eines Werkszeugs mit dem Ende 12 der Rastfeder dient.

In Fig. 1a) ist die Montage der Spiegelglasbaugruppe 4 an der Verstellvorrichtung 2 dargestellt. Der Glasverstellmechanismus 2 ist mit einem Rand 15 versehen, der umlaufend oder eingeschnitten sein kann und der eine bzw. mehrere Schultern bildet. Für die Montage wird die Glasbaugruppe 5 derart angesetzt, daß nicht dargestellte Ansätze in die Haken 7 eingesetzt werden können. Dadurch werden zwei formschlüssige Verbindungen hergestellt. Dann wird die Spiegelglasbaugruppe 4 mit dem oberen Rand entsprechend Pfeil 16 bewegt, so daß die Einlaufschräge 10 am Rand bzw. an der Schulter 15 der Verstellvorrichtung 2 unter leicht federnder Verbiegung der Rastfeder entlanggleiten kann und der Haken 9 der Rastfeder mit der Schulter durch Einklipsen in Eingriff treten kann. Dadurch wird die Spiegelglasbaugruppe insgesamt an der Verstellvorrichtung 2 befestigt und festgelegt. Das Ende 12 der Feder stützt sich an dem Vorsprung 13 ab bzw. wird gegen diesen gedrückt. Vorzugsweise drückt gleichfalls die vordere Seite des Verstellmechanismus 2 gegen den Endbereich 11 der Rastfeder.

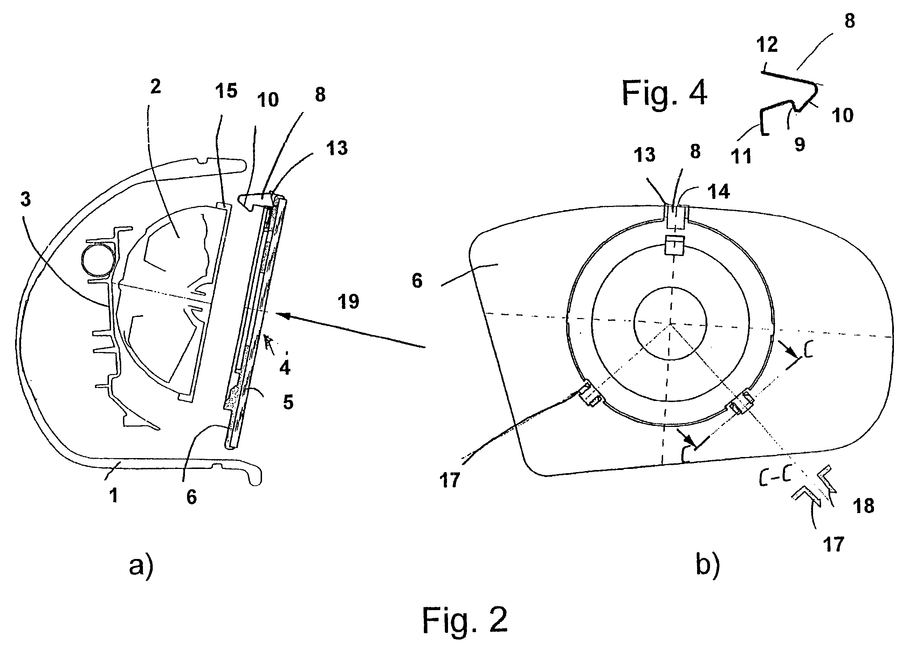

In Fig. 2 ist ein weiteres Ausführungsbeispiel der Spiegelglasbaugruppe 4 und ihrer Verbindung mit dem Verstellmechanismus 2 dargestellt. Wie aus Fig. 2b) zu erkennen ist, sind an dem Spiegelglasträger 6 Verklipselemente 17 angebracht, die näher im Schnitt C-C dargestellt sind. Die Verklipselemente 17 weisen Rastnasen 18 auf. An dem Verstellantrieb 2 sind entsprechende nicht dargestellte Ansätze vorgesehen, die zwischen die Klipselemente 17 geschoben werden und die durch die Rastnasen 18 festgelegt sind.

Zum Befestigen wird entsprechend Fig. 2a) die Spiegelglasbaugruppe 4 in Richtung 19 in etwa parallel zu der dem Spiegelträger 6 zugewandten Seite der Verstellvorrichtung 2 bewegt bis die Einlaufschräge 10 der Rastfeder 8 über die Schulter 15 gleitet, wobei gleichzeitig die nicht dargestellten Ansätze mit den Verklipselementen 17 in Eingriff treten. Durch Gegendrücken der Spiegelglasbaugruppe 4 gegen den Verstellantrieb 2 greift der Haken 9 der Rastfeder über die Schulter 15 und gleichzeitig die Rastnasen 18 über die Ansätze, so daß die Spiegelglasbaugruppe 4 mit der Verstellvorrichtung 2 verbunden ist.

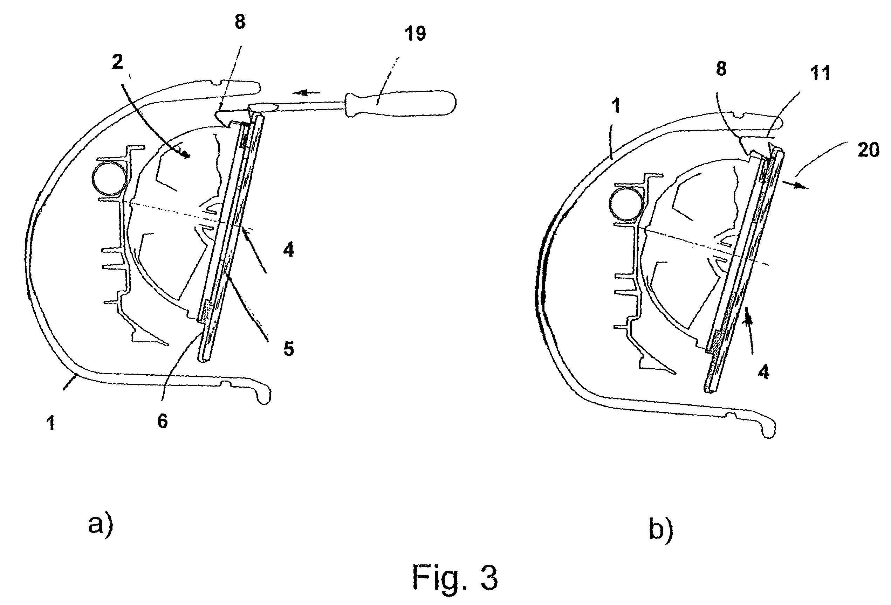

In Fig. 3 ist die Demontage der Spiegelglasbaugruppe aus dem Verstellmechanismus 2 dargestellt. Wie in Fig. 3a) zu erkennen ist, wird ein Werkzeug, z.B. ein Schraubendreher 19 an dem Rand des Spiegelträgers durch die Lücke 14 im Vorsprung 13 gegen das Ende 12 der Rastfeder 8 gedrückt. Dadurch verbiegt sich die Rastfeder in federnder Weise und das Werkzeug 19 hebt das Ende 12 der Rastfeder 8 vcn dem Vorsprung ab. Damit ist die Spannung der Rastfeder 8 aufgehoben, wie aus der Fig. 3b) zu erkennen ist und die Spiegelglasbaugruppe 4 kann entsprechend Pfeil 20 von dem Verstellantrieb 2 abgezogen werden, wobei je nach formschlüssiger Verbindung der anderen Befestigungspunkte, d.h. Verklipsung mit den Verklipselementen 17 oder Hintergreifen, die Verklipsung oder die Ansätze von den Haken 7 gelöst werden.

Durch Vorsehen der Rastverbindung über die Rastfeder 8 ist somit eine leichte Montage und eine leichte Demontage durch die von außen lösbare Rastfeder gegeben. Im beschriebenen Ausführungsbeispiel ist der Verstellmechanismus 2 als elektrischer Antrieb beschrieben, selbstverständlich kann auch ein manueller Glasverstellmechanismus vorgesehen sein.

## Patentansprüche

1. Kraftfahrzeugspiegel mit einer in einem Gehäuse aufgenommenen Spiegelglasbaugruppe, die mindestens ein Spiegelglas und einen Träger für das Spiegelglas aufweist und die an einer Verstellvorrichtung zum Einstellen der Position der Spiegelglasbaugruppe über formschlüssige Verbindungen befestigt ist, wobei
mindestens eine der formschlüssigen Verbindungen eine von außen lösbare Rastfederverbindung ist, bei der eine Rastfeder (8) mit einem Hakenbereich (9) und einer Einlaufschräge (10) eine Schulter an der Verstellvorrichtung (2) hintergreift, wobei beim Montieren der Glasbaugruppe (4) an der Verstellvorrichtung die Schulter (15) an der Einlaufschräge unter federnder Verbiegung des Rastfeders entlanggleitet bis der Hakenbereich (9) die Schulter (15) hintergreift, **dadurch gekennzeichnet, dass** die Rastfeder (8) als gebogenes Federband ausgebildet ist, dessen Endbereiche an dem Spiegelträger festgelegt sind, wobei das eine Ende des Federbandes sich zumindest im eingebauten Zustand der Spiegelglasbaugruppe (4) unter Spannung gegen einen Vorsprung (13) am Spiegelträger (6) abstützt, und zum Demontieren der Spiegelglasbaugruppe (4) der Vorsprung (13) so ausgebildet ist, dass das Ende des Federbandes oder der Rastfeder (8) zum Lösen vom Vorsprung (13) mittels eines Werkzeugs zugänglich ist.

2. Kraftfahrzeugspiegel nach Anspruch 1, **dadurch gekennzeichnet, dass** die Rastfeder (8) als getrenntes Bauteil ausgebildet ist.

3. Kraftfahrzeugspiegel nach einem der Ansprüche 1 bis 2, **dadurch gekennzeichnet, dass** ein Endbereich (11) der Rastfeder mit durch Einführen in Ausnehmungen am Spiegelträger (6) festgelegt ist, wobei die Verstellvorrichtung (2) zumindest teilweise gegen den Endbereich (11) drückt.

4. Kraftfahrzeugspiegel nach einem der Ansprüche 1 bis 3, **dadurch gekennzeichnet, dass** mindestens drei formschlüssige Verbindungen zwischen Spiegelglasbaugruppe (6) und Verstellvorrichtung (2) vorgesehen sind, von denen mindestens eine als die von außen lösbare Rastverbindung ausgebildet ist, wobei die anderen formschlüssigen Verbindungen nach Lösen der Rastfederverbindung lösbar sind.

5. Kraftfahrzeugspiegel nach einem der Ansprüche 3 bis 4, **dadurch gekennzeichnet, dass** der Vorsprung (13) einen Einschnitt (14) zum Ansetzen des Werkzeuges (19) gegen oder unter das Ende (12) des Federbandes aufweist.

6. Kraftfahrzeugspiegel nach einem der Ansprüche 1 bis 5, **dadurch gekennzeichnet, dass** das gebogene Federband bzw. die Rastfeder (8) aus Metall besteht.

## Claims

1. Motor vehicle mirror comprising a mirror-glass assembly group accommodated in a housing with at least one mirror glass and a support for the mirror glass, mounted on an adjustment device for adjusting the position of the mirror-glass assembly group via positive connections, and
at least one of the positive connections is an externally releasable detention spring connection in which a detention spring (8) reaches with a hook area (9) and an insertion slant (10) behind a shoulder at the adjustment device (2); and during mounting of the glass assembly group (4) at the adjustment device, the shoulder (15) slides along the insertion slant whilst flexurally bending the detention spring until the hook area (9) reaches behind the shoulder (15),
**characterised in that** the detention spring (8) is designed as a bent spring the end areas of which are secured on the mirror support and the one end of the bent spring supports itself at least in its installed state against the mirror-glass assembly group (4) under tension against a protrusion (13) at the mirror support (6); and for the purpose of disassembly of the mirror-glass assembly group (4), the protrusion (13) is designed in such a manner that the end of either the bent spring or the detention spring (8) is accessible by means of a tool for the purpose of release from the protrusion (13).

2. Motor vehicle mirror according to Claim 1, **characterised in that** the detention spring (8) is designed as a separate assembly component.

3. Motor vehicle mirror according to one of Claims 1 to 2, **characterised in that** an end area (11) of the detention spring is fixed by insertion into cutouts of the mirror support (6), and the adjustment device (2) pushes at least partially against the end area (11).

4. Motor vehicle mirror according to one of Claims 1 to 3, **characterised in that** at least three positive connections between mirror-glass assembly group (6) and adjustment device (2) are provided, of which at least one is designed as the externally releasable detent connection, and the other positive connections are releasable after release of the detention spring connection.

5. Motor vehicle mirror according to one of Claims 3 to 4, **characterised in that** the protrusion (13) comprises a cutout (14) for placing the tool (19) against or below the end (12) of the bent spring.

6. Motor vehicle mirror according to one of Claims 1 to 5, **characterised in that** the bent bent spring or detention spring (8) is made of metal.

## Revendications

1. Miroir d'automobile comportant un ensemble de verre à glace logé dans un boîtier qui comprend au moins un verre à glace et un support pour le verre à glace et qui est fixé, par le biais de liaisons par coopération de formes, à un dispositif de réglage servant à ajuster la position de l'ensemble de verre à glace, au moins l'une des liaisons par coopération de formes étant une liaison à ressort d'encliquetage pouvant être rendue amovible de l'extérieur dans laquelle un ressort d'encliquetage (8) comportant une zone à crochet (9) et un chanfrein d'insertion (10) engrène un épaulement au niveau du dispositif de réglage (2), l'épaulement (15) glissant sur le chanfrein d'insertion glissant, lors du montage de l'ensemble de verre à glace (4) sur le dispositif de réglage, avec flexion élastique du ressort d'encliquetage, jusqu'à ce que la zone à crochet (9) engrène l'épaulement (15), **caractérisé en ce que** le ressort d'encliquetage (8) est configuré en tant que bride de ressort courbée dont les zones d'extrémité sont fixées au support du miroir, la première extrémité de la bride de ressort s'appuyant, au moins à l'état monté de l'ensemble de verre à glace (4), avec tension contre une saillie (13) sur le support de miroir (6) et, pour le démontage de l'ensemble de verre à glace (4), la saillie (13) étant réalisée de telle sorte que l'extrémité de la bride de ressort ou du ressort d'encliquetage (8) soit accessible au moyen d'un outil pour dégager la saillie (13).

2. Miroir d'automobile selon la revendication 1, **caractérisé en ce que** le ressort d'encliquetage (8) est réalisé en tant que composant séparé.

3. Miroir d'automobile selon l'une des revendications 1 à 2, **caractérisé en ce qu'**une zone d'extrémité (11) du ressort d'encliquetage est fixée par insertion dans des creux au niveau du support du miroir (6), le dispositif de réglage (2) appuyant au moins de manière partielle contre la zone d'extrémité (11).

4. Miroir d'automobile selon l'une des revendications 1 à 3, **caractérisé en ce qu'**au moins trois liaisons par coopération de formes sont prévues entre l'ensemble de verre à glace (6) et le dispositif de réglage (2), liaisons parmi lesquelles au moins une est réalisée en tant que liaison à cran d'arrêt pouvant être rendue amovible de l'extérieur, les autres liaisons par coopération de formes pouvant être rendues amovibles après le dégagement de la liaison par ressort d'encliquetage.

5. Miroir d'automobile selon l'une des revendications 3 à 4, **caractérisé en ce que** la saillie (13) comprend une encoche (14) pour l'application de l'outil (19) contre ou sous l'extrémité (12) de la bride de ressort.

6. Miroir d'automobile selon l'une des revendications 1 à 5, **caractérisé en ce que** la bride de ressort courbée ou le ressort d'encliquetage (8) est composé(e) de métal.
